(19) Europäisches Patentamt
European Patent Office
Office européen des brevets

(11) Publication number: **0 003 437**
**B1**

(12) **EUROPEAN PATENT SPECIFICATION**

(45) Date of publication of patent specification: **14.07.82**

(21) Application number: **79300133.0**

(22) Date of filing: **26.01.79**

(51) Int. Cl.[3]: **C 08 J 9/00,** C 08 G 18/54, C 08 G 12/00

(54) **Process for the manufacture of resin-modified polyurea foams.**

(30) Priority: **30.01.78 GB 368578**

(43) Date of publication of application:
**08.08.79 Bulletin 79/16**

(45) Publication of the grant of the patent:
**14.07.82 Bulletin 82/28**

(84) Designated Contracting States:
**BE DE FR GB NL**

(56) References cited:
**FR - A - 2 051 948**
**FR - A - 2 333 814**
**GB - A - 1 030 162**
**GB - A - 1 268 440**

(73) Proprietor: **IMPERIAL CHEMICAL INDUSTRIES PLC**
**Imperial Chemical House Millbank**
**London SW1P 3JF (GB)**

(72) Inventor: **Wooler, Alan Metcalf**
**115a Seymour Grove**
**Old Trafford Manchester M16 OLQ (GB)**

(74) Representative: **Stephenson, Kenneth et al,**
**Imperial Chemical Industries PLC Legal Department: Patents Thames House North Millbank**
**London SW1P 4QG (GB)**

EP 0 003 437 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for the manufacture of resin-modified polyurea foams

This invention relates to resin-modified polyurea foams and methods for their manufacture.

It has been proposed to manufacture foamed plastics materials having a polyurea structure by reacting organic polyisocyanates with water in the presence of catalysts for the reaction and optionally other additives such as surface active agents. Thus, in our Netherlands Patent Application No. 76 06827 there has been proposed a method for the manufacture of polyurea foams characterised in that an organic polyisocyanate is reacted with at least a chemically equivalent amount of water in the presence of an imidazole compound. Such foams have many excellent properties but their fire resistance is not always sufficiently high to meet the increasingly stringent standards which are demanded.

It has also been proposed to make foamed plastics materials by polymerising phenolic resins or amino resins under foam-forming conditions but the processes employed generally make use of catalysts of a strongly acidic nature which can have a corrosive effect on the machinery involved.

It has now been found that foams which are attractive from both technical and economic viewpoints can be made by incorporating a phenolic or amino resin into a polyurea foam formulation.

Thus, according to the present invention, there is provided a process for the manufacture of polyurea foams by reacting an organic polyisocyanate with at least a chemically equivalent amount of water in the presence of a catalyst for the reaction and in the absence of acid characterised in that the reaction is performed in the presence of an amino or phenolic resin.

Organic polyisocyanates which may be used in the process of the invention include particularly those aromatic polyisocyanates that have already been described for use in the manufacture of polymeric foams such as polyurethane, polyurea or polyisocyanurate foams. Particular mention may be made of diphenylmethane diisocyanate and tolylene diisocyanate in their various forms. It is preferred to use a polyisocyanate component comprising diphenylmethane diisocyanate especially diphenylmethane - 4,4' - diisocyanate which may be in admixture with isomeric or other related polyisocyanates or may have been modified in known manner to introduce a significant isocyanurate, carbodiimide, uretonimine or biuret content. Polyisocyanate components comprising diphenylmethane diisocyanate include the crude diphenylmethane diisocyanates that have been fully described in the prior art. Particularly useful crude diphenylmethane diisocyanate compositions contain from 30 to 95%, especially from 40 to 80%, by weight of diphenylmethane diisocyanates, the remainder being largely polymethylene polyphenyl polyisocyanates of functionality greater than two. Diphenylmethane diisocyanate, in one or other of its forms, may also be used in admixture with tolylene diisocyanate.

The water used in the process of the invention must be in an amount that is at least chemically equivalent to the isocyanate groups present in the organic polyisocyanate on the basis of two isocyanate groups reacting with one molecule of water. Useful results can be obtained by using up to 10 times the amount of water that is equivalent to the polyisocyanate but it is preferred to use from 1.5 to 5 and especially from 2 to 4 times the chemically equivalent amount. The amount of excess water provides a means of controlling opening of the cells of the foam and can be used to avoid shrinkage and scorch in large sections.

Catalysts for the reaction between the polyisocyanate and water have been described in the literature relating to the reaction of organic isocyanates. Particular mention may be made of tertiary amines, especially water-soluble tertiary amines. Especially suitable catalysts include imidazole compounds, especially those of the formula:

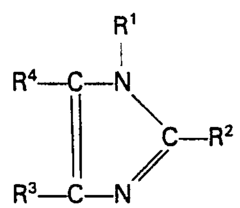

wherein $R^1$, $R^2$, $R^3$ and $R^4$ each independently represents hydrogen or optionally substituted alkyl, especially lower alkyl. Examples of such compounds include imidazole, 1 - methylimidazole, 2 - methylimidazole, 4 - methylimidazole, 1,2 - dimethylimidazole, 2,4 - dimethylimidazole, 1,2,4 - trimethylimidazole, 1,2,5 - trimethylimidazole, 2,4,5 - trimethylimidazole and 1,2,4,5 - tetramethylimidazole. Imidazole compounds that have been found to be particularly useful in the process of the invention include imidazole, 1 - methylimidazole, 2 - methylimidazole and 1,2 - dimethylimidazole and mixtures of two or more of these compounds. The imidazole compound or other tertiary amine is used in a catalytically effective amount, for example from 0.5 to 10%, especially 1.5 to 8%, by weight based on the weight of organic polyisocyanate. The most suitable amount to use in any particular case depends on the compound being used and on the other components of the formulation and can easily be found by trial.

Many of the imidazole compounds are sufficiently soluble in water to be used in the

form of a solution in the water that is reacted with the polyisocyanate. The occurrence of crystallisation from the aqueous solution at low temperatures can often be avoided by using mixtures of imidazole compounds. The alkalinity of the aqueous solutions can cause corrosion of equipment containing aluminium or zinc but this can be reduced by saturating the catalyst solution with carbon dioxide or partially neutralising it with boric acid. Imidazole compounds having lower aqueous solubility may be dissolved in another component, for example the polyisocyanate or a tris(halogenalkyl)phosphate.

The imidazole compounds give exceptional stability to the foams during formation and in this respect they are superior to other catalysts. Thus, the problems of foam collapse and excessive shrinkage which can occur in the preparation of foams using some catalysts are largely overcome by using the imidazole compounds. Furthermore, the imidazole compounds are more tolerant to the presence or absence of other conventional foam additives.

The amino and phenolic resins used in the process of the invention are known materials that have been fully described in the prior art as have methods for their preparation.

The amino resins are resinous condensation products of amino type compounds such as urea, thiourea, ethyleneurea, melamine, substituted melamines, guanamine, benzoguanamine or dicyandiamide with aldehydes such as formaldehyde acetaldehyde, propionaldehyde, butyraldehyde, benzaldehyde or furfuraldehyde. The preferred resins are the condensation products of urea or melamine with formaldehyde. The properties of the resins may be varied in known manner by appropriate adjustment of the type and ratio of components and the reaction conditions of catalyst, time and temperature.

The phenolic resins are resinous condensation products of phenols such as phenol, cresols, xylenols or resorcinol with formaldehyde or, less usually, other aldehydes such as acetaldehyde, propionaldehyde, butyraldehyde, benzaldehyde, furfuraldehyde or hexamethylene tetramine. The condensation of the phenol with the aldehyde may be carried out in known manner under acid or alkaline conditions and the properties of the product will vary accordingly. Generally, the phenol and the aldehyde are reacted in a ratio of from 1 to 3 mols of aldehyde per mol of phenol.

The amounts of amino or phenolic resins used in the process of the invention may vary over a wide range. Suitable foamed products are obtained when the amino or phenolic resin constitutes from 5 to 70% and preferably from 20 to 40% of the weight of the final foam.

The amino or phenolic resin may be mixed with the other components of the foam formulation in any suitable manner. In some cases it may be convenient to pre-mix the resin with one of the organic components of the formulation but it is usually preferred to use the resin in the form of an aqueous syrup and to mix it with the water used in the foaming process. In this case, the water present in the aqueous syrup must be taken into account in any consideration of the stoichiometry of the system. Incorporating the resin with the aqueous component of the reaction mixture is useful in that it increases the volume of the aqueous component which otherwise is very small in relation to the polyisocyanate component. It is also advantageous in producing a blend of a viscosity suitable for metering by gear pumps and similar equipment, which are subject to stoppage when used with low viscosity components.

In general, urea-formaldehyde and melamine-formaldehyde resins are preferred because they are more compatible with water than are the phenol-formaldehyde resins and hence may be blended more easily with the aqueous component. It is often convenient to dissolve phenol-formaldehyde resins in plasticiser-type additives such as tris-2-chloroethyl phosphate. This solution may be used as a separate component of the reaction mixture or it may be emulsified into the aqueous component using a surfactant.

The foams made by the process of the invention are substantially rigid, have predominantly open cells and are of very low flammability. A tendency to brittleness can be reduced by including a plasticiser in the foam formulation, especially a tris(halogenoalkyl)phosphate such as tris - 2 - chloroethyl phosphate, tris-chloropropyl phosphate or tris - 2,3 - dibromopropyl phosphate. In addition to having a useful plasticising effect, these compounds bring about a further improvement in the fire resistance of the foams. Particularly useful amounts of tris(halogenoalkyl)phosphate are in the range of from 10 to 200% and especially from 25 to 75% by weight based on the weight of polyisocyanate.

In addition to the ingredients already mentioned, there may be included in the foam-forming reaction mixture other additives of the types conventionally employed in the production of polymeric foams from organic polyisocyanates. Thus, the reaction mixture may optionally contain surface active agents or foam stabilisers, for example siloxane-oxyalkylene copolymers, anionic surface active agents and non-ionic surface active agents such as ethylene oxide propylene oxide block copolymers. The surface active agent may be used in amounts of from 0.01 to 10% by weight based on the weight of polyisocyanate but is especially effective in amounts of from 0.1 to 5%.

The stability of the foam-forming system may be still further improved by including a minor amount of an organic polyol in the foam formulation, keeping the water in an amount that is at least chemically equivalent to the

polyisocyanate. Suitable organic polyols include non-polymeric polyols, for example ethylene glycol, diethylene glycol 1,4-butane diol, glycerol, hexanetriol and sorbitol.

Other suitable polyols include polymeric polyols which are useful in reducing the friability of the foams. Such polyols usually have from 2 to 8 hydroxyl groups per molecule and include, in particular, polyether and polyester polyols. These have been widely described in the prior art, for example in "Polyurethanes, Chemistry and Technology" by J. H. Saunders and K. C. Frisch (Interscience Publishers), especially at pages 32—48 of Part I. Useful polyether polyols include polyoxypropylene polyols and ethylene oxide tipped polyoxypropylene polyols. Useful polyester polyols include the reaction products of dihydric alcohols with dicarboxylic acids, optionally with the inclusion of higher functionality reactants. The polymeric polyols may also be used in a form where they have been modified in known manner by polymerising one or more ethylenically unsaturated monomers, for example acrylonitrile, styrene or methyl methacrylate therein. Particularly suitable polymeric polyols have hydroxyl numbers of less than 600, preferably in the range 30—200. The amount of organic polyol used should preferably not exceed 30% of the polyisocyanate on a chemical equivalents basis. The polyol may be included in a formulation by prereacting it with the polyisocyanate to give a prepolymer or by mixing it together with the water and the aldehyde resin syrup and using as a one shot system.

Other additives which may be incorporated in the reaction mixture include dyes, pigments, fillers, inorganic flame retardants such as ammonium phosphate, ammonium polyphosphate, and ammonium bromide and urea.

Particularly useful reaction mixtures consist essentially of a crude diphenylmethane diisocyanate composition containing from 40 to 80% by weight of diphenylmethane diisocyanate, from 1.5 to 5 times the chemically equivalent amount of water, from 0.5 to 4% by weight of an imidazole compound, from 10 to 30% by weight of an organic flame-retardant such as tris-chloroethyl phosphate or tris-chloropropyl phosphate, from 20 to 50% by weight of an amino or phenolic resin and from 0.1 to 1.0% by weight of a surface active agent and optionally other conventional foam-forming ingredients of an inert nature, the weight percentages being based on the weight of the total composition.

The foam-forming ingredients used in the process of the invention may be mixed together continuously or discontinuously using any of the methods and equipment that have been described for the preparation of polymeric foams from organic polyisocyanates. The starting materials may be at normal or slightly elevated temperatures, for example 50°C.

The foams made in accordance with the present invention are economically more attractive than polyurea foams made by prior methods. In addition to the economic benefit, the presence of the amino or phenolic resin has the useful effect of absorbing some of the heat of reaction and so reducing the temperature rise during foaming, and produces improved fire resistance with reduced smoke evolution.

Compared with prior art foams made from amino or phenolic resins, the foams of the present invention are easier to make and avoid the use of acidic catalysts with their associated corrosion problems. Furthermore, the foams of the invention are less brittle and may be made less prone to absorb water.

The foams obtained according to the process of the invention may have low or high densities and may be used in packaging, horticultural applications, general purpose insulation, cavity wall insulation, panel filling etc. The usefulness of the foam for any particular application may be influenced by varying the formulation. The foams may be formed in combination with other materials, for example flexible or rigid facing materials, using known methods, for example continuous lamination techniques.

The invention is illustrated but not limited by the following Examples in which all parts and percentages are by weight. The words "Aerolite", "Kauramine", "Suprasec" and "Pluronic" appearing in the Examples are registered trade marks.

Example 1

70 Parts of a crude diphenylmethane diisocyanate composition containing approximately 55% of diisocyanato-diphenyl-methane isomers and having an NCO content of 30.7% are mixed with 30 parts of tris-2-chloroethyl phosphate. To this mixture is added a second mixture consisting of 80 parts of a urea-formaldehyde resin syrup (Ciba-Geigy Aerolite A 300), 15 parts of water, 4 parts of 2-methylimidazole and 0.5 parts of Silicone B 1400 (Goldschmidt). The whole composition is throughly mixed forming a viscous solution which creams after 15 seconds and then foams (rise time 80 seconds).

The foam has a fine texture, open cells and a density of 20 kg/m$^3$. It is difficult to ignite, is self-extinguishing and gives very little smoke.

Example 2

A urea-formaldehyde syrup of lower free formaldehyde content than that used in Example 1 was prepared by blending together 179 parts of Aerolite A 300 resin with 32.3 parts of urea dissolved in 15.9 parts of water. After standing for 2 days the modified resin was used in making a foam as in Example 1. Reaction times and density of foam were very similar but the amount of formaldehyde vapours produced as collected from the reaction mixture foamed in a polythene bag was much reduced.

By a phenylhydrazone method of analysis there was evolved 0.46 mg. formaldehyde from the reaction mixture used in Example 1 but reduced to 0.10 in the total vapours from the reaction mixture of Example 2.

Example 3

A syrup was prepared by dissolving 30 parts of a melamine-formaldehyde powder known as Kauramine 650 available from BASF in 12 parts of water, to which were then added 2 parts of 1,2 - dimethylimidazole and 0.5 part of Silicone L540 to give the first component. A second component was prepared by admixture of 10 parts of tris-2-chloroethyl phosphate and 40 parts of a modified diphenylmethane diisocyanate known as Suprasec VM30. After mechanical mixing for 10 seconds a fluid emulsion was obtained which started to rise at 20 seconds and completed foaming in 1 minute to give a fine textured light coloured foam of density 19 kg/m$^3$ which was non-friable and displayed similar good fire resistance properties.

Example 4

20 Parts of a phenol-formaldehyde syrup supplied by Bakelite as R19595 was diluted with 10 parts of tris - 2 - chloroethyl phosphate and then this was mixed with 1.1 parts 2 - methylimidazole dissolved in 3.8 parts of water and 0.1 part of Pluronic L62 when it produced an emulsion. On mixing this with 35 parts of crude diphenylmethane diisocyanate, the initially fluid mix became thixotropic in about 30 seconds and foaming started at about 90 seconds with end of rise at about 200 seconds. The resultant foam had a density of 130 kg/m$^3$ and displayed good resistance to fire penetration.

## Claims

1. A process for the manufacture of polyurea foams by reacting an organic polyisocyanate with at least a chemically equivalent amount of water, on the basis of two isocyanate groups reacting with one molecule of water, in the presence of a catalyst for the reaction and in the absence of acid characterised in that the reaction is performed in the presence of an amino or phenolic resin.

2. A process as claimed in claim 1 wherein the resin is a urea-formaldehyde or melamine-formaldehyde resin.

3. A process as claimed in claim 1 or claim 2 wherein the resin constitutes from 5 to 70% of the weight of the foam.

4. A process as claimed in claim 3 wherein the resin constitutes from 20 to 40% of the weight of the foam.

## Revendications

1—Procédé de production de mousses de polyurée par réaction d'un polyisocyanate organique avec au moins une quantité chimiquement équivalente d'eau sur base de deux radicaux isocyanate réagissant avec une molécule d'eau, en présence d'un catalyseur pour la réaction et en l'absence d'acide, caractérisé en ce que la réaction est exécutée en présence d'une résine aminoplaste ou d'une résine phénolique.

2—Procédé suivant la revendication 1, dans lequel la résine est une résine urée-formaldéhyde ou une résine mélamine-formaldéhyde.

3—Procédé suivant la revendication 1 ou 2, dans lequel la résine constitue 5 à 70% du poids de la mousse.

4—Procédé suivant la revendication 3, dans lequel la résine constitue 20 à 40% du poids de la mousse.

## Patentansprüche

1. Verfahren zur Herstellung von Polyharnstoffschaumstoffen durch Umsetzen eines organischen Polyisocyanats mit mindestens einer chemisch äquivalenten Menge Wasser, auf der Basis, daß zwei Isocyanatgruppen mit einem Molekül Wasser reagieren, in Gegenwart eines Katalysators für die Reaktion und in Abwesenheit von Säure, dadurch gekennzeichnet, daß die Reaktion in Gegenwart eines Amino- oder Phenolharzes ausgeführt wird.

2. Verfahren nach Anspruch 1, wobei das Harz ein Harnstoff/Formaldehyd- oder Melamin/Formaldehydharz ist.

3. Verfahren nach Anspruch 1 oder 2, wobei das Harz 5 bis 70% des Gewichts des Schaumstoffs ausmacht.

4. Verfahren nach Anspruch 3, wobei das Harz 20 bis 40% des Gewichts des Schaumstoffs ausmacht.